# EUROPÄISCHE PATENTSCHRIFT

(11) **EP 2 734 332 B1**
(45) Veröffentlichungstag und Bekanntmachung des Hinweises auf die Patenterteilung: **12.09.2018**
(21) Anmeldenummer: 12740540.5
(22) Anmeldetag: 17.07.2012
(51) Int. Cl.: B23K 9/20

(54) **VERFAHREN ZUM AUFSCHWEIßEN EINES ANSCHWEIßELEMENTES AN EINEM GEGENSTÜCK**
METHOD OF WELDING A WELD ELEMENT ONTO A COUNTERPART
MÉTHODE DE SOUDAGE D'UN ÉLÉMENT DE SOUDURE À UNE PIÈCE

(30) Priorität: 22.07.2011 DE 102011079679
(43) Veröffentlichungstag der Anmeldung: 28.05.2014
(73) Patentinhaber: Ford Global Technologies, LLC, Dearborn, MI 48126 (US)
(72) Erfinder: ROTHEUT, Dietmar, 52249 Eschweiler (DE); KUEHN, Gerald, 50259 Pulheim (DE); COON, Ted, Livonia, Michigan 48152 (US); CARTER, Jason, Southgate, Michigan 48195 (US); BRUTTO, Melissa Marie, New Boston, Michigan 48164 (US); LAWRENCE, David, Wayne, Michigan 48184 (US)
(74) Vertreter: Dörfler, Thomas
(86) Internationale Anmeldenummer: PCT/EP2012/063943
(87) Internationale Veröffentlichungsnummer: WO 2013/014021

(56) Entgegenhaltungen:
- EP-A1- 0 550 977
- DE-A1- 19 925 628

## Beschreibung

Die vorliegende Erfindung betrifft ein Verfahren zum Anschweißen eines Anschweißelementes nach dem Oberbegriff des Anspruchs 1, wobei das Anschweißelement ein Anschweißende und einen dazu beabstandet angeordneten Funktionsbereich aufweist, an einem Gegenstück, beispielsweise an einem Fahrzeugblech.

Anschweißelemente können zum Beispiel im so genannten LichtbogenSchweißverfahren auf Gegenstücke, beispielsweise Bleche stumpfartig aufgeschweißt werden, so dass die Anschweißelemente mit ihrem Funktionsbereich von den Gegenstücken abstehen und so diverse Bauteile bzw. Komponenten halten können. Beispielsweise im Kraftfahrzeugbau können die Anschweißelemente mit ihrem Anschweißende stumpf auf ein Karosserieblech oder dergleichen aufgesetzt werden, mit diesem verscheißt werden und an ihrem Funktionsbereich so ausgeführt sein, dass vielfältige Möglichkeiten gegeben sind, unterschiedliche Bauteile oder Komponenten zu halten. Der Funktionsabschnitt eines jeden Anschweißelementes ist dabei variabel, also korrespondierend zu der jeweils zu haltenden Komponente angepasst konstruiert. Beispielsweise können an dem Funktionsbereich Kabelbäume, einzelne Kabel, Leitungen, Schläuche oder dergleichen gehalten werden, wobei der Funktionsbereich auch zum Halten von Verkleidungen genutzt werden kann. Insofern ist der Funktionsbereich vielfältig ausführbar.

Die EP 0 550 977A1 beschreibt ein Verfahren zu elektrischen Verschweißen zweier Schweißteile mittele Stromfluss über die Schweißstelle und die Anwendung von Gas, wie z.B. inerte Gase zur Verhinderung bzw. Beseitigung einer Oxydation an der Schweißstelle. Das Gas wird durch eine Bohrung in einem der Schweißteile zur Schweißstelle geführt, so dass das Gas radial zu der Bohrung die Schweißstelle überstreicht. Das Gas kann ein inertes Gas, wie z.B. Argon oder Stickstoff sein. Offenbart ist weiter, dass alternativ eine wässrige Flüssigkeit sein kann, wobei das Wasser im Bereich der Schweißstelle verdampft.

Als Lichtbogenschweißverfahren kann ein so genanntes Hubzundüngsschweißverfahren, wie dies z.B. in der DE 199 25 628 A1 beschrieben ist, angewendet werden.

Bekannt ist auch das WELDFAST® Schweißverfahren, bei welchem Anschweißelemente, also so genannte WELDFAST® Halter mit einem Blech mittels Lichtbogenschweißverfahren verschweißt werden. Die WELDFAST® Halter weisen das Anschweißende und den Funktionsbereich auf. Als nachteilig bei den WELDFAST® Haltern ist aber anzusehen, dass diese an ihren Anschweißenden länglich ausgeführt sind, so dass quasi eine sich lang erstreckende Anschweißkante gebildet ist. Um diese Anschweißelemente mit einem Blech verschweißen zu können bedarf es demnach eines speziellen Schweißgerätes, welches so ausgeführt ist, dass die längliche Anschweißkante sicher verschweißbar ist. Möglich ist allerdings, dass das angeschweißte Anschweißelement mit Schweißfehlern behaftet verschweißt wird, so dass die erforderlichen Festigkeitsparameter nicht erreicht werden können, wobei die Anschweißelemente gegebenenfalls schon bei erforderlichen Prüfverfahren den Prüfbedingungen nicht stand halten. Leicht vorstellbar ist auch, dass die notwendigen Schweißparameter aufgrund der länglichen Schweißkante erheblich variieren, wodurch eine kostengünstige Herstellung erschwert wird, da die Schweißparameter stets erneut festgelegt und überprüft werden sollten. Kosten steigernd wirkt sich auch der Einsatz von Schutzgas aus, welches den Schweißbereich umgebend vor Oxidation schützen soll. Hierzu weist eine an das WELDFAST® Verfahren angepasste Schweißvorrichtung eine Freiraum einschränkende Schutzgasglocke auf.

Trotz der Lichtbogen stabilisierenden Wirkung des Schutzgases Argon, wurde beobachtet, dass der Lichtbogen nicht immer wiederholbar stabil war, was zu unerwünschten Durchschweißungen bzw. Durchstechungen des Bleches führte. Beobachtet wurde zum Beispiel bei Anschweißelementen mit länglicher Schweißkante, dass Lichtbögen an der Schweißkante abschnittsweise abrissen, abschnittsweise aber Lichtbögen aufrechterhalten wurden, was zu einem punktuellen Energieeintrag in das Fahrzeugblech und somit zu dem Durchstechen des Lichtbogens und zu einer qualitativ schlechten also zu verwerfenden Schweißnaht führte. Schlechte oder fehlerhafte mit Lichtbogenschweißverfahren hergestellte Schweißnähte z.B. nach dem WELDFAST® System sind allerdings nur sehr schwer mittels automatischer Fehlererkennungssysteme aufzuspüren. Daher werden diese Schweißverbindungen durch manuelle Sichtprüfungen kontrolliert, und im Falle eines Fehlers durch manuelle Nacharbeit repariert, indem zum Beispiel Schweiß- oder Lötzusatzmaterial auf die Fehlerstelle aufgebracht wird. Diese manuelle Kontrolle mit der zusätzlich erforderlichen manuellen Reparatur ist sehr kostenintensiv.

Derartige Gegenstücke, bzw. Fahrzeugbleche an denen das Anschweißelement anschweißbar ist, weisen eine Beschichtung, bzw. eine Schmiermittelbeschichtung auf, welche zu Umformzwecken aufgebracht wurde. Die Schmiermittelschicht ist jedoch willkürlich aufgebracht, und nach längerer Lagerdauer des Fahrzeugsblechs teilweise schon schwerkraftbedingt oder aus anderen Gründen von dem Fahrzeugblech entfernt. Bekannt ist als Schmiermittel z.B. Ziehöl einzusetzen, welches teilweise zu einer raschen Abtrocknung der Fahrzeugbleche führt. In der Tat ist in der DE 199 25 628 A1 offenbart, dass eine Restbeschichtung, also eine Schmiermittelbeschichtung vorhanden ist, welche aus einem früheren Umformprozess vorhanden sein kann. Die DE 199 25 628 A1 schlägt vor, die Schmiermittelbeschichtung vor dem eigentlichen Schweißprozess zu entfernen, indem ein Reinigungsstrom vor dem eigentlichen Schweißstrom erzeugt wird, wobei der Reinigungsstrom über das Anschweißelement fließt. So würde eine schmiermittelfreie Schweißzone gebildet. Es werden aber zunehmend auch so genannte "trockene" Fahrzeugbleche verwendet, welche keine Schmiermittelbeschichtung aufweisen.

Insbesondere wenn die Anschweißelemente an ihrem Anschweißende eine Anschweißkante aufweisen, also länglich, wenngleich auch gebogen ausgeführt sind, wurde, wie oben bereits erwähnt, beobachtet, dass die Lichtbögen teilweise abrissen, also instabil waren, so dass ein qualitativ zu verwerfende Schweißverbindung hergestellt wurde.

Vor diesem Hintergrund liegt der vorliegenden Erfindung die Aufgabe zugrunde, ein Verfahren zum Anschweißen eines Anschweißelements bereitzustellen, mit dem stets eine sichere Verschweißung des Anschweißelementes an dem Gegenstück bzw. an dem Fahrzeugblech möglich ist.

Diese Aufgabe wird durch ein Verfahren mit den Merkmalen des Anspruchs 1 gelöst. Weitere, besonders vorteilhafte Ausgestaltungen der Erfindung offenbaren die Unteransprüche.

Erfindungsgemäß wird ein Verfahren zum Anschweißen eines Anschweißelementes an ein Gegenstück bereitgestellt, bei welchem zumindest einer der Verbindungspartner vor dem Schweißprozess an seinem Schweißbereich vollflächig und mit einem in seiner Schichtdicke gleichmäßig aufzubringenden Benetzungsmittel benetzt wird.

Mit der Erfindung wird ein Verfahren zum Anschweißen eines Anschweißelementes an ein Gegenstück, z.B. an ein Fahrzeugblech bereitgestellt, bei welchem, wie sich gezeigt hat, stabile Lichtbögen einstellen. Dadurch werden Energiespitzen durch vormals abreißende Lichtbögen vermieden, wodurch auch ein Durchstechen des Gegenstückes, bzw. des Fahrzeugbleches durch einen punktuellen Energieeintrag ausgeschlossen ist. Mit dem erfindungsgemäßen Verfahren wird eine Schweißnaht bereitgestellt, welche den besonders hohen Qualitätsanforderungen des Fahrzeugbaus genügt. Das Fahrzeugblech kann aus dem Werkstoff Stahl bestehen. Denkbar ist, Fahrzeugbleche mit einer Stärke ab 0,8 mm oder dünner zu verwenden. Selbstverständlich ist die genannte Blechstärke nur beispielhaft zu verstehen. Auch ist das Verfahren natürlich auch außerhalb der Fahrzeugindustrie durchführbar. Insofern beschränkt sich das Verfahren nicht nur auf Fahrzeugbleche als Gegenstück. Das Gegenstück kann auch eine nicht-metallische Schicht aufweisen, beispielsweise kann das Gegenstück verzinkt sein.

Das Benetzungsmittel kann entweder auf das Gegenstück, also auf das Fahrzeugblech oder auf die Schweißkante des Anschweißelementes aufgebracht werden. Bevorzugt ist, wenn das Benetzungsmittel auf das Gegenstück, also auf das Fahrzeugblech aufgebracht wird. Weiter bevorzugt ist, wenn das Benetzungsmittel nur im Bereich der Schweißzone bzw. im Schweißbereich aufgebracht wird, wobei die Schweißzone bzw. der Schweißbereich durch die Schweißkante des Anschweißelementes vorgegeben ist. Natürlich wird das aufgebrachte Benetzungsmittel dabei den Bereich der Schweißkante etwas übergreifen, was durchaus zielführend ist, da so noch Schutzwirkungen des Benetzungsmittels hinsichtlich z.B. möglicher Schweißspritzer erreicht werden können. Denkbar ist, das Benetzungsmittel im Bereich einer Schutzgasglockenfläche aufzubringen, so dass der Schweißbereich sehr breit von dem Benetzungsmittel übergriffen wird.

Das Benetzungsmittel kann manuell aufgebracht werden. Hierzu kann ein Hilfsmittel, beispielsweise ein mit dem Benetzungsmittel getränkter Lappen über die Schweißzone geführt werden. Um jedoch eine möglichst gleichmäßige Benetzungsmittelschichtdicke aufzutragen, ist bevorzugt vorgesehen, das Benetzungsmittel mit einem Benezungsmittelnebler oder einer anderen geeigneten Vorrichtung aufzutragen. Der Benezungsmittelnebler kann dabei manuell bedient werden, oder über eine Steuereinheit angesteuert werden. Wird der Benetzungsmittelnebler manuell bedient, ist jedoch sichergestellt, das pro Bedienung jeweils die identische Menge Benetzungsmittel ausgegeben wird, was bei einer Ansteuerung über die Steuereinheit ebenfalls sichergestellt ist. Insofern könnte die erforderliche Menge an Benetzungsmittel einfach durch Abzählen erforderlicher Betätigungen eines Betätigungselementes des Neblers, so genannte "Clicks" erreicht werden, wobei jede Betätigung, also jeder "Click" einer vorgegebenen, austretenden Menge entspricht, welche direkt auf den Schweißbereich aufgetragen wird.

Das Benetzungsmittel wird in einer möglichst gleichmäßigen Schichtdicke aufgetragen. Besonders zielführend ist, wenn das Benetzungsmittel mit einer Mindestschichtdicke von 0,8g/m² aufgebracht wird. Bevorzugt wird das Benetzungsmittel mit einem Betrag von maximal 1,2g/m² aufgetragen. Die genannten Beträge sind natürlich nur beispielhaft, wobei die Schichtdicke natürlich von den Schweißparametern, wie Blechstärke, Verzinkung oder Schichtdicke der Verzinkung usw. abhängt. So wurde gefunden, dass gute, also den Erfordernissen genügende Schweißverbindungen auch bei einer Schichtdicke bzw. bei einer Menge an Benetzungsmittel mit einem Betrag von 2,0g/m² erzielt werden konnten.

Die Fahrzeugbleche können einem Umformprozess unterzogen worden sein, weswegen die Fahrzeugbleche mit einer Schmiermittelschicht, beispielsweise mit einem Tiefziehöl versehen sein können. Die genannten Schichtdickenbeträge des Benetzungsmittels beziehen sich dabei auf vollständig ölfreie Bleche, wobei die Bleche lediglich abgewischt wurden, um den Zustand des ölfreien Bleches zu erreichen. Ein trockenes Fahrzeugblech kann natürlich noch einen geringen Ölfilm z.B. mit einem Betrag von 0,3 bis 0,4 g pro Quadratmeter [0,3 bis 0,4 g/m²] aufweisen.

Zielführend ist, wenn die auf dem Gegenstück vorhandene Schmiermittelschicht in seiner Schichtdicke bemessen bzw. festgestellt wird, was z.B. mit fotooptischen Verfahren machbar ist. Mit dem Messergebnis kann dann die fehlende Menge Benetzungsmittel im Schweißbereich aufgebracht, zum Beispiel aufgesprüht werden. So kann z.B. sichergestellt werden, dass stets die Mindestmenge bzw. die vorteilhafteste Menge an Benetzungsmittel im Schweißbereich vorhanden ist, indem einfach die festgestellte Differenz aufgebracht wird. Wird natürlich eine Übermenge an Schmiermittelschicht festgestellt, wird die Schmiermittelschicht entfernt. Eine erneute Messung kann durchgeführt werden, um sodann die günstigste Benetzungsmittelmenge aufzubringen.

Um vollständig trockene Fahrzeugbleche bzw. Gegenstücke zu erhalten, könnten diese mit geeigneten Mitteln, zum Beispiel mit entsprechenden Pulvern bearbeitet werden, welche anschließend bevorzugt rückstandsfrei entfernt werden. Auch ist es möglich den Schweißbereich mit Pressluft annähernd ölfrei bzw. ölfrei zu blasen, um danach eine definierte Menge an Benetzungsmittel zu applizieren. Ist das Fahrzeugblech, bzw. der Schweißbereich, an welchem das Anschweißelement aufgeschweißt werden soll, vom Restöl befreit, so dann aber mit der günstigsten Menge an Benetzungsmittel versehen, wirkt sich dies in positiver Hinsicht auf die Schweißnahtqualität aus. Die günstigste Menge an Benetzungsmittel ist von verschiedenen Faktoren bzw. Schweißparametern abhängig, wie oben bereits erwähnt, wobei die günstigste Menge für jede Schweißaufgabe zumindest einmal empirisch ermittelt und entsprechend abgelegt bzw. gespeichert werden sollte. Erfindungsgemäß wird als Benetzungsmittel ein Ziehöl aufgebracht, wobei das Ziehöl natürlich den hohen Anforderungen der Automobilindustrie genügen muss. Mit anderen Worten wird ein Ziehöl aufgebracht, welches eine entsprechende Zulassung für die Automobilhersteller hat, welche in einschlägigen, nationalen und/oder internationalen Regelwerken niedergelegt ist. Insofern könnte der Benetzungsmittelnebler als Ölnebler bezeichnet werden, wobei auf dessen Funktionsweise nicht weiter eingegangen wird.

Überraschender Weise zeigt die Erfindung dass ein Benetzen des Schweißbereiches mit dem in der Automobilindustrie eingesetzten Ziehöl trotz der länglichen Ausgestaltung des Schweißbereiches (Schweißkante des Anschweißelementes) stabile Lichtbögen erzeugt, so dass stets ein sicheres Verschweißen des Anschweißelementes mit dem Gegenstück bzw. mit dem Fahrzeugblech erzielbar ist.

Günstig ist also, zunächst die Schichtdicke der vorhandenen Schmiermittelschicht festzustellen. Zeigt das Messergebnis, dass die Schmiermittelschicht dünner ist als die für die Schweißaufgabe günstigste Benetzungsmittelschichtdicke, ist erfindungsgemäß vorgesehen, die Schmiermittelschicht nicht zu entfernen, sondern die erforderliche Menge an Benetzungsmittel aufzubringen. Zielführender Weise wird als Benetzungsmittel ein zum für den Umformprozess verwendetes Ziehöl identisches Ziehöl eingesetzt. Dazu wird das Fahrzeugblech zu dem Benetzungsmittelnebler bzw. zu dem Ölnebler befördert (oder der Ölnebler wird zu dem Fahrzeugblech befördert), wobei der notwendige Mengenbetrag an Benetzungsmittel aufgebracht wird. Anschließend wird das Anschweißelement auf das Fahrzeugblech aufgeschweißt.

Das Anschweißelement kann ein solches mit fußseitiger Schweißkante und kopfseitigem Funktionsbereich sein, also einem WELDFAST® Element entsprechen. Mit der Erfindung werden aber wesentlich verbesserte Schweißergebnisse erzielt als bei dem herkömmlichen WELDFAST® Schweißverfahren, da erfindungsgemäß, gegebenenfalls zusätzlich, Benetzungsmittel auf die Schweißzone aufgebracht wird, welches den Lichtbogen an der länglichen Schweißkante stabilisiert. Wesentlich ist dabei, dass nicht eine zufällige Menge an Benetzungsmittel aufgebracht wird, wie dies zum Beispiel bei dem Aufbringen von entspannten Wasser oder leicht flüchtigen Mitteln der Fall sein kann. Zielführend ist bei der Erfindung vielmehr, dass eine genauestens bestimmbare Menge an Benetzungsmittel (mindestens jedoch 0,8g/m²), bevorzugt nur im Schweißbereich aufgebracht wird, so dass eine Lichtbogenstabilisierung erreicht wird.

Mit der Lichtbogenstabilisierung ist direkt auch eine sehr gute Schweißnahtqualität insbesondere bei den WELDFAST ® -Elementen erreichbar, so dass manuelle Reparaturen fehlerhafter Schweißnähte erheblich reduziert werden konnten. Dies wirkt sich natürlich kostenreduzierend aus. Denkbar ist auch auf ein Schutzgas, z.B. auf Argon zu verzichten, was sich ebenfalls kostenmindernd auswirkt. Dann könnte natürlich auch die Schutzgasglocke entfallen.

Das Schweißverfahren ist also bevorzugt ein elektrisches Schweißverfahren. Das Benetzungsmittel bzw. das Ziehöl bietet den zielführenden Vorteil eines hohen Anfangswiderstandes, welcher sich langsam reduziert. So wird das Aufschmelzen der Schweißzone gezielt erreicht. Insbesondere hat sich gezeigt, dass der Schweißstrom reduziert werden kann. Beispielhaft wurde der Schweißstrom von 750A auf 700A bei einer Schweißdauer von jeweils 160ms reduziert, wobei sich bei einem Schweißstrom von 750A und nicht erfindungsgemäß benetzter Schweißzone Durchstechungen zeigten. Bei einem Schweißstrom von 700 A und erfindungsgemäß benetzter Schweißzone zeigte sich eine qualitativ hochwertige Schweißverbindung.

## Patentansprüche

1. Verfahren zum Anschweißen eines Anschweißelements an einem Gegenstück, umfassend zumindest den Schritt, dass
zumindest einer der Verbindungspartner vor dem Schweißprozess in einem Schweißbereich vollflächig und in einer Schichtdicke gleichmäßig mit einem Benetzungsmittel benetzt wird, **dadurch gekennzeichnet, dass** als Benetzungsmittel Ziehöl aufgetragen wird, wobei eine auf dem Gegenstück anhaftende Schmiermittelschicht auf diesem verbleibt, wobei das Benetzungsmittel im Schweißbereich auf die Schmiermittelschicht aufgebracht wird, bis eine erforderliche Gesamtschichtdicke erreicht ist.

2. Verfahren nach Anspruch 1, **dadurch gekennzeichnet, dass** das Benetzungsmittel auf das Gegenstück aufgebracht wird.

3. Verfahren nach Anspruch 1 oder 2, **dadurch gekennzeichnet, dass** das Benetzungsmittel im Bereich des Schweißbereiches auf das Gegenstück aufgebracht wird, welcher Schweißbereich einer Schweißkante des Anschweißelementes entspricht.

4. Verfahren nach einem der vorhergehenden Ansprüche, **dadurch gekennzeichnet, dass**
das Benetzungsmittel mit einem Benetzungsmittelnebler aufgebracht wird.

5. Verfahren nach einem der vorhergehenden Ansprüche, **dadurch gekennzeichnet, dass**
das Benetzungsmittel mit einem Betrag von mindestens 0,8g/m² aufgebracht wird.

6. Verfahren nach einem der vorhergehenden Ansprüche, mit welchem ein Anschweißelement an ein Gegenstück anschweißbar ist, welches Anschweißelement eine fußseitige Anschweißkante und einen kopfseitigen Funktionsbereich aufweist, wobei das Gegenstück als Fahrzeugblech ausgeführt ist.

## Claims

1. Method for welding a weld-on element onto a counterpart, comprising at least the step that, before the welding process, at least one of the parts being connected is wetted with a wetting agent over the full area and uniformly in layer thickness in a welding region **characterized in that** drawing oil is applied as the wetting agent, wherein a layer of lubricant adhering to the counterpart remains on it, the wetting agent being applied to the layer of lubricant in the welding region until the required total layer thickness is achieved.

2. Method according to Claim 1, **characterized in that** the wetting agent is applied to the counterpart.

3. Method according to Claim 1 or 2, **characterized in that** the wetting agent is applied to the counterpart in the region of the welding region, which welding region corresponds to a welding edge of the weld-on element.

4. Method according to one of the preceding claims, **characterized in that** the wetting agent is applied with a wetting agent nebulizer.

5. Method according to one of the preceding claims, **characterized in that** the wetting agent is applied in an amount of at least 0.8 g/m².

6. Method according to one of the preceding claims, with which a weld-on element can be welded onto a counterpart, which weld-on element has a weld-on edge at the bottom and a functional region at the top, the counterpart being configured as a vehicle panel.

## Revendications

1. Procédé de soudage d'un élément de soudure à une pièce, comprenant au moins l'étape dans laquelle on mouille au moins un des partenaires d'assemblage avant l'opération de soudage, dans une zone de soudage sur toute la surface et avec une épaisseur de couche uniforme, avec un agent de mouillage, **caractérisé en ce que** l'on dépose comme agent de mouillage de l'huile d'étirage, dans lequel une couche de lubrifiant adhérant à la pièce reste sur celle-ci, dans lequel on dépose l'agent de mouillage dans la zone de soudage sur la couche de lubrifiant, jusqu'à ce qu'une épaisseur de couche totale nécessaire soit atteinte.

2. Procédé selon la revendication 1, **caractérisé en ce que** l'on dépose l'agent de mouillage sur la pièce.

3. Procédé selon la revendication 1 ou 2, **caractérisé en ce que** l'on dépose l'agent de mouillage dans la région de la zone de soudage sur la pièce, ladite zone de soudage correspondant à un bord de soudage de l'élément de soudure.

4. Procédé selon l'une quelconque des revendications précédentes, **caractérisé en ce que** l'on dépose l'agent de mouillage avec un nébuliseur d'agent de mouillage.

5. Procédé selon l'une quelconque des revendications précédentes, **caractérisé en ce que** l'on dépose l'agent de mouillage en une quantité d'au moins 0,8 g/m².

6. Procédé selon l'une quelconque des revendications précédentes, avec lequel un élément de soudure peut être soudé à une pièce, ledit élément de soudure présentant un bord de soudage du côté du pied et une zone fonctionnelle du côté de la tête, dans lequel la pièce est constituée par une tôle de véhicule.
